# EUROPÄISCHE PATENTSCHRIFT

(11) **EP 2 997 803 B1**
(45) Veröffentlichungstag und Bekanntmachung des Hinweises auf die Patenterteilung: **09.08.2017**
(21) Anmeldenummer: 14185567.6
(22) Anmeldetag: 19.09.2014
(51) Int. Cl.: A01B 35/24

(54) **Landwirtschaftliches Arbeitsgerät**
Agricultural working device
Outillage agricole

(43) Veröffentlichungstag der Anmeldung: 23.03.2016
(73) Patentinhaber: Einböck GmbH & Co. KG, 4751 Dorf/Pram (AT)
(72) Erfinder: Pichler, Bernhard, 4720 Kallham (AT); Einböck, Michael, 4751 Dorf an der Pram (AT)
(74) Vertreter: Weickmann & Weickmann PartmbB

(56) Entgegenhaltungen:
- DE-A1- 3 900 100
- DE-A1-102009 051 431
- US-A- 3 431 982

## Beschreibung

### I. Anwondungsgebiet

Die vorliegende Erfindung betrifft ein landwirtschaftliches Arbeitsgerät zum Bearbeiten eines Bodens. Das Arbeitsgerät umfasst ein landwirtschaftliches Arbeitswerkzeug, beispielsweise einen Rechen, einen Zinken, ein Rad oder einen Fingerstern, mittels welchem der Boden unmittelbar bearbeitet werden kann. Das landwirtschaftliche Arbeitsgerät wird üblicherweise von einer Zugmaschine in Form eines landwirtschaftlichen Traktors gezogen.

### II. Technischer Hintergrund

Aus der DE 39 00 100 A1 ist es bekannt, ein zur Bodenbearbeitung vorgesehenes, landwirtschaftliches Arbeitswerkzeug in Form einer Egge mittels einer Zugfeder in Richtung des Bodens vorzuspannen. Dabei ist das von der Egge abgewandte Ende der Zugfeder mit einem Seil verbunden, das auf eine Welle aufwickelbar ist. Durch Aufwickeln des Seils auf die Welle oder Abwickeln des Seils von der Welle kann die Vorspannung der Zugfeder und somit die Andruckkraft der Egge an den Boden eingestellt werden.

Bei dem bekannten landwirtschaftlichen Arbeitsgerät ist es nicht möglich, die Andruckkraft der Egge an den Boden auf einen Wert einzustellen, der geringer ist als derjenige Wert der Andruckkraft, der sich aus dem Eigengewicht der Egge ergibt. Das bekannte landwirtschaftliche Gerät eignet sich daher nicht zu einer sanften Bodenbearbeitung, die beispielsweise bei der Pflege von Pflanzen gewünscht ist.

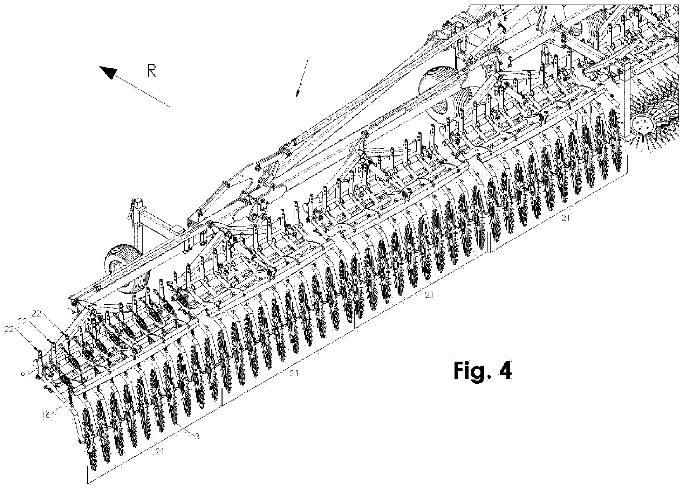

Aus der DE 10 2009 051 431 A1 ist eine Anordnung für ein Bodenbearbeitungswerkzeug bekannt, welches von einem eigenelastischen Trägerelement getragen wird. Bei der in Fig. 4 gezeigten Spiralfeder handelt es sich um eine Druckfeder, welche die rückstellende Wirkung des eigenelastisch vorspannbaren Trägerelements verstärkt. Bei der bekannten Anordnung handelt es sich um eine Überlastsicherung mit einstellbarem Ansprechdruck. Die Andruckkraft des Bodenbearbeitungswerkzeugs an den zu bearbeitenden Boden ist konstant.

Die US 3,431,982 beschreibt ein landwirtschaftliches Arbeitsgerät mit einem Trägerelement, das ein Arbeitswerkzeug trägt. Mit Hilfe zweier Druckfedern wird es dem Trägerelement ermöglicht, während der Bodenbearbeitung einem Hindernis elastisch auszuweichen. Somit handelt es sich auch hier um eine Überlastsicherung. Deren Ansprechkraft ist zwar einstellbar, jedoch ist die von dem Eigengewicht der Anordnung bestimmte Andruckkraft des Arbeitswerkzeugs an den Boden stets konstant und nicht einstellbar.

### III. Darstellung der Erfindung

### a) Technische Aufgabe

Es ist daher die Aufgabe der vorliegenden Erfindung, ein landwirtschaftliches Arbeitsgerät zum Bearbeiten eines Bodens zu schaffen, bei welchem die Andruckkraft des Arbeitswerkzeugs an den Boden derart einstellbar ist, dass eine Grobbearbeitung des Bodens mit großer Andruckkraft sowie eine sanfte Feinbearbeitung des Bodens mit geringer Andruckkraft ermöglicht wird. Der Mechanismus zum Einstellen der Andruckkraft des Arbeitswerkzeugs an den Boden soll dabei konstruktiv möglichst einfach gestaltet sein.

### b) Lösung der Aufgabe

Erfindungsgemäß wird ein landwirtschaftliches Arbeitsgerät mit wenigstens einem Trägerelement vorgeschlagen, das ein landwirtschaftliches Arbeitswerkzeug zum Bearbei
ten eines Bodens trägt. Das Trägerelement ist um einen Drehpunkt schwenkbar angeordnet. Wenigstens ein erstes Zugfederelement greift derart an einem ersten Angriffspunkt des Trägerelements an, dass das Arbeitswerkzeug um den Drehpunkt in Richtung des Bodens vorspannbar ist. Wenigstens ein zweites Zugfederelement greift derart an einem zweiten Angriffspunkt des Trägerelements an, dass das Arbeitswerkzeug um den Drehpunkt in Richtung von dem Boden weg vorspannbar ist. Das zweite Zugfederelement spannt das Arbeitswerkzeug somit in eine Richtung vor, die derjenigen entgegengesetzt ist, in welche das Arbeitswerkzeug von dem ersten Zugfederelement vorgespannt wird. Mittels einer Einstelleinrichtung sind die Vorspannungen des ersten und des zweiten Zugfederelements einstellbar. Die Einstelleinrichtung ermöglicht dementsprechend das Einstellen einer gewünschten Andruckkraft des Arbeitswerkzeugs an den Boden.

Bei den Zugfederelementen im Sinne der vorliegenden Erfindung handelt es sich um solche mechanischen Elemente, die beim Dehnen bzw. Auseinanderziehen eine Zugkraft entwickeln, welche danach trachtet, das jeweilige Zugfederelement in seinen ungedehnten Zustand zurück zu führen. Beispielsweise können Schraubenfedern oder Gummielemente zur Anwendung kommen. Auch von anderen Federarten gebildete Zugfederelemente sind denkbar. Im Rahmen einer weiteren Alternative kann ein Zugfederelement an sich aus einer Kombination unterschiedlicher Federarten bestehen. Bei Bedarf können verschiedenartige Zugfederelemente miteinander kombiniert werden, beispielsweise eine Schraubenfeder als erstes Zugfederelement mit einem Gummielement als zweitem Zugfederelement.

Das erste Zugfederelement beaufschlagt das Trägerelement mit einem ersten Drehmoment, das um den Drehpunkt wirkt und das Arbeitswerkzeug in Richtung Boden drückt. Das zweite Zugfederelement beaufschlagt das Trägerelement mit einem zweiten Drehmoment, das ebenso um den Drehpunkt wirkt, jedoch das Arbeitswerkzeug von dem Boden wegdrückt. Auf das Trägerelement wirkt schließlich das Gesamt- oder Summendrehmoment, welches sich aus der Summe des ersten und des zweiten Drehmoments ergibt. Das Gesamtdrehmoment kann das Trägerelement samt Arbeitswerkzeug zusätzlich zu deren Eigengewicht gegen den zu bearbeitenden Boden drücken, so dass eine Grobbearbeitung mit einer hohen Andruckkraft erfolgt, die größer ist als die sich allein aus dem Eigengewicht des Trägerelements und des Arbeitswerkzeugs ergebende Andruckkraft. Alternativ kann das Gesamtdrehmoment von dem zu bearbeitenden Boden weg gerichtet wirken. Ist in diesem Fall das Gesamtdrehmoment kleiner als das sich aus dem Eigenwicht des Trägerelements und des Arbeitswerkzeugs ergebende Gewichtsdrehmoment, so wird das Arbeitswerkzeug zum Zwecke der Feinbearbeitung des Bodens mit einer sanften Andruckkraft gegen den Boden gedrückt, die kleiner ist als diejenige Andruckkraft, die sich ausschließlich aus dem Eigengewicht des Trägerelements und des Arbeitswerkzeugs ergeben würde. Wird mit Hilfe der Einstelleinrichtung ein Gesamtdrehmoment eingestellt, welches größer ist als das Gewichtsdrehmoment, so wird das Trägerelement samt Arbeitswerkzeug von dem Boden abgehoben.

Es ist denkbar, dass beide Zugfederelemente unabhängig von der Wirkungsrichtung ihres Gesamtdrehmoments stets in gespanntem Zustand gehalten werden. Vorteilhaft ist es, wenn die Vorspannungen des ersten und des zweiten Zugfederelements mittels der Einstelleinrichtung derart einstellbar sind, dass sich das zweite Zugfederelement in einem ungespannten Zustand befindet, wenn das erste Zugfederelement eine Vorspannung des Arbeitswerkzeugs in Richtung Boden ausübt, und sich das erste Zugfederelement in einem ungespannten Zustand befindet, wenn das zweite Zugfederelement eine Vorspannung des Arbeitswerkzeugs von dem Boden weg ausübt.

Die Einstelleinrichtung zum Einstellen der Andruckkraft des Arbeitswerkzeugs an den Boden kann beispielsweise zwei voneinander unabhängige Stellorgane aufweisen, von denen eines das erste Zugfederelement und das andere das zweite Zugfederelement ansteuert.

Die Einstelleinrichtung zum Einstellen der Andruckkraft des Arbeitswerkzeugs an den Boden wird vorzugsweise von einem einzigen Stellorgan gebildet, das direkt oder indirekt sowohl mit einem von dem ersten Angriffspunkt abgewandten ersten Zugende des ersten Zugfederelements als auch mit einem von dem zweiten Angriffspunkt abgewandten zweiten Zugende des zweiten Zugfederelements wirkverbunden ist. Auf diese Weise wird der Vorteil erreicht, dass in Gewicht und Kosten sparender Weise nur ein einziges Stellorgan zur Ansteuerung der beiden Zugfederelemente erforderlich ist. Ein separates Stellorgan für jedes einzelne Zugfederelement erübrigt sich, so dass die Anzahl der Komponenten des landwirtschaftlichen Arbeitsgeräts gemäß der vorliegenden Erfindung gering gehalten werden kann.

Besonders vorteilhaft ist es in diesem Zusammenhang, das erste Zugende und das zweite Zugende direkt oder indirekt mit einem gemeinsamen Haltepunkt zu verbinden, der mit Hilfe des einzigen Stellorgans räumlich bewegbar ist. Die durch Betätigung des Stellorgans eingeleitete räumliche Bewegung des gemeinsamen Haltepunkts bewirkt auf einfache Weise die Einstellung der Vorspannungen des ersten und des zweiten Zugfederelements.

Das landwirtschaftliche Arbeitsgerät kann mehrere Arbeitseinheiten aufweisen, wobei jede Arbeitseinheit jeweils wenigstens das Trägerelement, das Arbeitswerkezug, den Drehpunkt, das erste Zugfederelement, das zweite Zugfederelement und den gemeinsamen Haltepunkt umfasst. Alle Haltepunkte der mehreren Arbeitseinheiten sind vorzugsweise an einem Querträger angeordnet, der mit Hilfe eines einzigen Stellorgans räumlich bewegbar ist. Auf diese Weise können die Vorspannungen einer Vielzahl von Zugfederelementpaaren, wobei jedes Zugfederelementpaar jeweils das erste Zugfederelement und das zweite Zugfederelement umfasst, durch Betätigung eines einzigen Stellorgans eingestellt werden.

Der Querträger ist mittels wenigstens zwei Schwenkhebeln um eine Haltepunktachse drehbar gelagert. Eine Betätigung des Stellorgans bewirkt somit eine Schwenkbewegung des Querträgers um die Haltepunktachse.

Eine gedachte Verbindung der Drehpunkte der mehreren Arbeitseinheiten bildet eine Trägerelementachse. Um diese Trägerelementachse sind die mehreren Arbeitseinheiten schwenkbar.

Die Trägerelementachse kann von der Haltepunktachse beabstandet angeordnet sein und parallel zu ihr verlaufen. Alternativ ist denkbar, dieselbe Achse sowohl als Trägerelementachse als auch als Haltepunktachse auszubilden. Die Trägerelementachse und die Haltepunktachse sind dann identisch. Diese Alternative hat den Vorteil, dass das landwirtschaftliche Arbeitsgerät gemäß der vorliegenden Erfindung aus einer verringerten Anzahl von Komponenten in Kosten sparender Weise aufgebaut werden kann.

Das landwirtschaftliche Arbeitsgerät kann außerdem mehrere Arbeitsgruppen aufweisen, wobei jede Arbeitsgruppe jeweils die mehreren Arbeitseinheiten, den Querträger und das Stellorgan umfasst. Mit mehreren Arbeitsgruppen in diesem Sinne weist das landwirtschaftliche Arbeitsgerät mehrere Stellorgane auf, nämlich genau so viele Stellorgane wie Arbeitsgruppen vorhanden sind.

Das das Arbeitswerkzeug tragende Trägerelement weist vorzugsweise zwei Arme auf, wobei sowohl der erste Arm als auch der zweite Arm von dem Drehpunkt ausgeht. Dabei ist der erste Angriffspunkt an dem ersten Arm und der zweite Angriffspunkt an dem zweiten Arm angeordnet. In bevorzugter Weise trägt der zweite Arm das Arbeitswerkzeug.

Vorzugsweise bilden der erste Arm und der zweite Arm das Trägerelement als um den Drehpunkt schwenkbaren Winkelhebel aus. Der Winkel zwischen dem ersten Arm und dem zweiten Arm liegt in dem bevorzugten Winkelbereich von 90°-135°.

Um eine möglichste Platz sparende Konstruktion zu erreichen, werden der erste Arm, der zweite Arm, das erste Zugfederelement und das zweite Zugfederelement vorzugsweise in einer vertikalen Ebene liegend angeordnet.

Zur Lösung der erfindungsgemäßen Aufgabe schlägt die vorliegende Erfindung alternativ ein landwirtschaftliches Arbeitsgerät vor, bei welchem ein Zugfederelement zum Vorspannen des Arbeitswerkzeugs um den Drehpunkt in Richtung des Bodens und ein Druckfederelement zum Vorspannen des Arbeitswerkzeugs um den Drehpunkt in Richtung von dem Boden weg verwendet wird. Ein Stellorgan, mittels welchem lediglich die Vorspannung des Zugfederelements einstellbar ist, wird bei dieser Alternative zum Einstellen der Andruckkraft des Arbeitswerkzeugs an den Boden verwendet.

Bei dem Zugfederelement handelt es sich um ein mechanisches Element derselben Art wie bei der Lösung der erfindungsgemäßen Aufgabe mit zwei Zugfederelementen. Bei dem Druckfederelement handelt es sich um ein solches mechanisches Element, das beim Stauchen bzw. Zusammendrücken eine Druckkraft entwickelt, welche danach trachtet, das Druckfederelement in seinen ungestauchten Zustand zurück zu führen. Das Druckfederelement kann beispielsweise von einer Schraubenfeder oder einem Gummielement gebildet werden. Auch ein von anderen Federarten gebildetes Druckfederelement ist denkbar. Im Rahmen einer weiteren Alternative kann das Druckfederelement selbst aus einer Kombination unterschiedlicher Federarten bestehen. Bei Bedarf können das Zugfederelement und das Druckfederelement verschiedenartig ausgebildet werden, beispielsweise das Zugfederelement in Form einer Schraubenfeder und das Druckfederelement in Form eines Gummielements.

Bei dieser Alternativlösung wird die Grundeinstellung der Druckkraft des Druckfederelements vorzugsweise derart vorgenommen, dass das von dem Druckfederelement auf das Trägerelement ausgeübte und von dem Boden weg gerichtete Druckdrehmoment größer ist als das durch das Eigengewicht des Trägerelements und des Arbeitswerkzeugs bewirkte Gewichtsdrehmoment, das Richtung Boden wirkt. Solange das Zugfederelement bei dieser Grundeinstellung des Druckfederelements kein ausreichendes Zugdrehmoment auf das Trägerelement ausübt, bleibt das Trägerelement samt Arbeitswerkzeug in einer vom Boden abgehobenen Nichtarbeitsstellung. Durch Betätigen des Stellorgans kann das Zugfederelement gespannt und ein derart bemessenes Zugdrehmoment auf das Trägerelement aufgebracht werden, dass das Arbeitswerkzeug mit der gewünschten Andruckkraft an den Boden gedrückt wird. Eine grobe Bodenbearbeitung mit hoher Andruckkraft sowie eine sanfte Bodenbearbeitung mit einer Andruckkraft, die geringer ist als die sich aus dem Eigengewicht des Trägerelements und des Arbeitswerkzeugs ergebende Andruckkraft, werden somit auch mit der Alternativlösung erreicht.

Auch im Rahmen der Alternativlösung können in vorteilhafter Weise mehrere Arbeitseinheiten vorgesehen werden, wobei jede Arbeitseinheit jeweils wenigstens das Trägerelement, das Arbeitswerkzeug, den Drehpunkt, das Zugfederelement und das Druckfederelement umfasst. In diesem Fall können alle von dem ersten Angriffspunkt abgewandten Zugenden der Zugfederelemente der mehreren Arbeitseinheiten an dem Querträger angeordnet werden, der mittels des Stellorgans räumlich bewegbar ist. Die durch Betätigung des Stellorgans bewirkte räumliche Bewegung des Querträgers bewirkt eine gleichzeitige Spannung oder Entspannung aller Zugfederelemente der mehreren Arbeitseinheiten.

Bei der Alternativlösung können der erste Arm, der zweite Arm, das Zugfederelement und das Druckfederelement in vorteilhafter Weise in einer vertikalen Ebene liegend angeordnet werden.

### c) Ausführungsbeispiele

Beispielhafte Ausführungsformen der vorliegenden Erfindung werden nachfolgend anhand der Zeichnungen beschrieben. Es zeigen:
- Fig. 1:: eine Seitenansicht einer ersten Ausführungsform des erfindungsgemäßen landwirtschaftlichen Arbeitsgeräts;
- Fig. 1A:: eine Seitenansicht einer zweiten Ausführungsform des erfindungsgemäßen landwirtschaftlichen Arbeitsgeräts;
- Fig. 2:: eine Seitenansicht der ersten Ausführungsform gemäß Fig. 1, wobei drei in Blickrichtung der Figur hintereinander angeordnete Arbeitseinheiten sowie zusätzliche Bestandteile des landwirtschaftlichen Arbeitsgeräts gezeigt sind;
- Fig. 3:: eine perspektivische Teilansicht eines landwirtschaftlichen Arbeitsgeräts entsprechend der ersten Ausführungsform, in welcher eine Arbeitsgruppe umfassend mehrere Arbeitseinheiten gezeigt ist; und
- Fig. 4:: eine perspektivische Teilansicht eines landwirtschaftlichen Arbeitsgeräts entsprechend der ersten Ausführungsform, in welcher vier Arbeitsgruppen gezeigt sind.

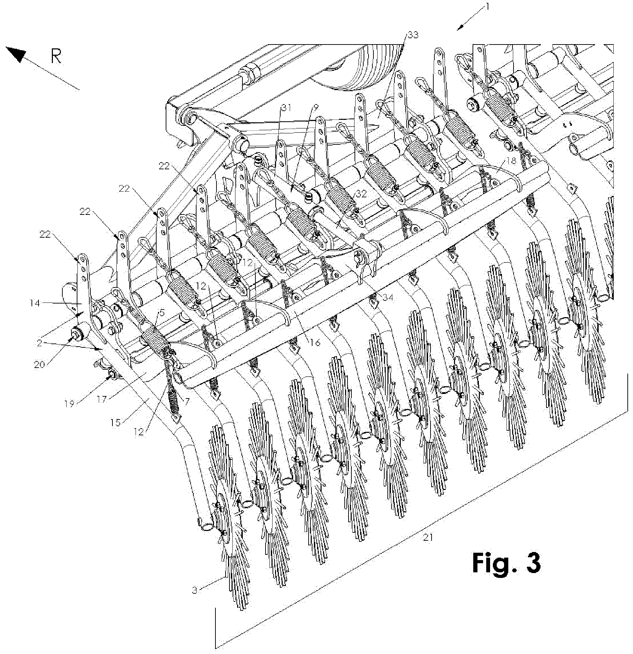

Die in den Figuren gezeigte Ausführungsform des landwirtschaftlichen Arbeitsgeräts 1 weist eine Vielzahl von Rechen 3 zur Bodenbearbeitung auf. In Fig. 4 ist eine Hälfte des Arbeitsgeräts 1 gezeigt. Im Einsatz wird es von einem Traktor in Zugrichtung R über das Feld gezogen, dessen Boden mit den Rechen 3 bearbeitet werden soll. In Fig. 4 sind insgesamt vierzig Rechen 3 zu erkennen, die sich auf vier Arbeitsgruppen 21 verteilen. Eine Arbeitsgruppe 21 ist in der vergrößerten Darstellung gemäß Fig. 3 gezeigt. Insgesamt umfasst die dargestellte Ausführungsform achtzig Rechen 3, da Fig. 4 nur die in Zugrichtung R linke Hälfte des landwirtschaftlichen Arbeitsgeräts 1 zeigt.

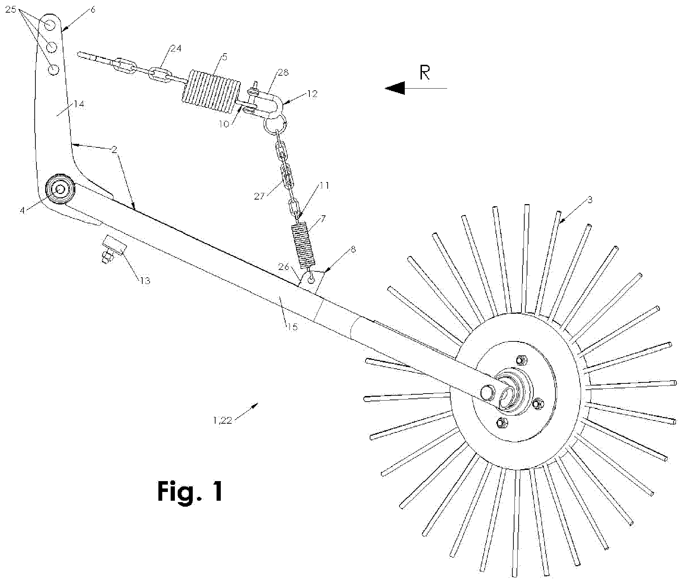

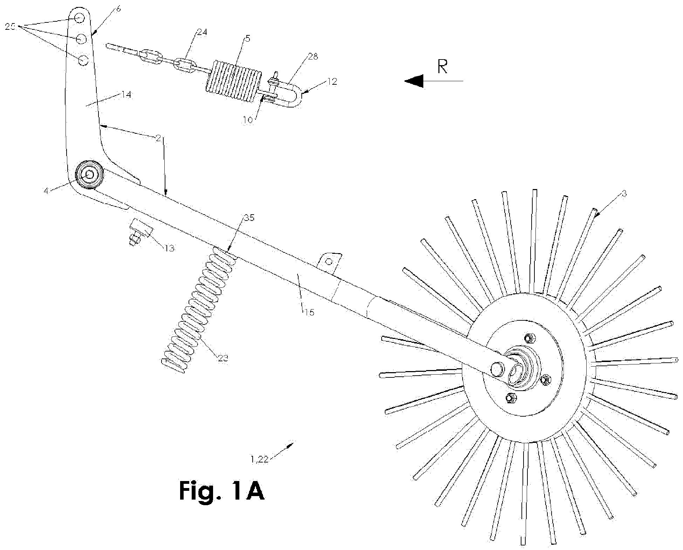

Jede Arbeitsgruppe 21 umfasst zehn Arbeitseinheiten 22, wobei eine Arbeitseinheit 22 in Fig. 1 gezeigt ist. Das Arbeitsgerät 1 weist eine den Bedürfnissen des jeweiligen Anwendungsfalls entsprechende Anzahl von Arbeitseinheiten 22 auf. Im Extremfall ist denkbar, dass das landwirtschaftliche Arbeitsgerät 1 nur eine einzige Arbeitseinheit 22 umfasst.

Die in Fig. 1 gezeigte Arbeitseinheit 22 weist ein Trägerelement 2 in Form eines Winkelhebels auf. Das Trägerelement 2 besteht aus einem ersten Arm 14 und einem zweiten Arm 15, die im Bereich eines Drehpunkts 4 drehstarr miteinander verbunden sind. Das Trägerelement 2 ist um den Drehpunkt 4 drehbar gelagert und sein zweiter Arm 15 trägt an seinem von dem Drehpunkt 4 abgewandten Ende den landwirtschaftlichen Rechen 3 zur Bodenbearbeitung.

Ein erstes Zugfederelement 5 in Form einer metallischen Schraubenfeder ist mittels einer ersten Kette 24 mit einem ersten Angriffspunkt 6 an dem ersten Arm 14 verbunden. Hierzu ist der Arm 14 bei der gezeigten Ausführungsform mit drei Einhängelöchern 25 versehen, in welche die Kette 24 je nach gewünschter Länge des Hebelarms zwischen dem Angriffspunkt 6 und dem Drehpunkt 4 eingehängt werden kann.

Ein zweites Zugfederelement 7 in Form einer metallischen Schraubenfeder ist über einen zweiten Angriffspunkt 8 mit dem zweiten Arm 15 des Trägerelements 2 verbunden. Der zweite Angriffspunkt 8 wird von einer Öse 26 gebildet, in welche das zweite Zugfederelement 7 eingehängt ist.

Auf der Seite ihrer von den Angriffspunkten 6 bzw. 8 abgewandten Zugenden 10 bzw. 11 sind die Zugfederelemente 5 bzw. 7 mit einem gemeinsamen Haltepunkt 12 verbunden. Das Zugende 11 des Zugfederelements 7 ist über eine zweite Kette 27 indirekt mit dem Haltepunkt 12 verbunden. Das Zugende 10 des Zugfederelements 5 ist über einen karabinerartigen Haken 28 indirekt mit dem Haltepunkt 12 verbunden.

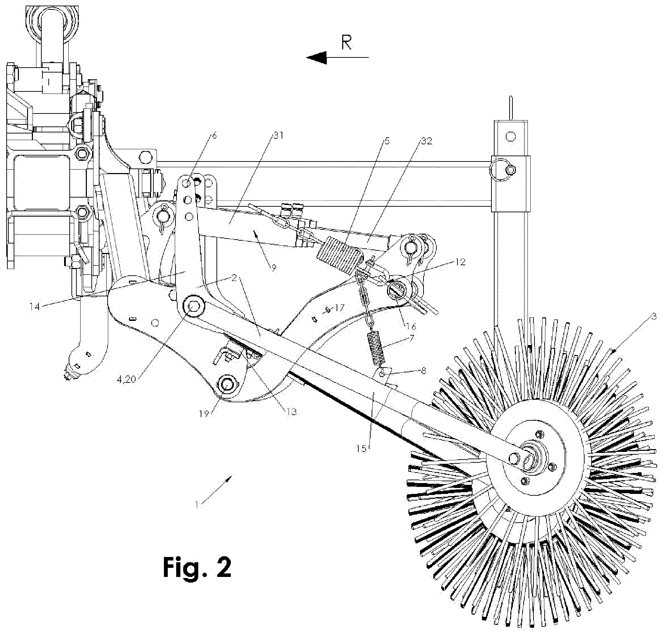

Wie in den Fig. 2 und 3 zu erkennen ist, wird der Haltepunkt 12 bei der gezeigten Ausführungsform von einer Halteöse gebildet, in welche die zweite Kette 27 sowie der karabinerartige Haken 28 eingehängt sind. Wie am besten in Fig. 3 zu erkennen ist, ist jede einen Haltepunkt 12 bildende Halteöse an einem Querträger 16 befestigt, der sich quer zu der Zugrichtung R erstreckt. Mit Hilfe von vier im Wesentlichen S-förmigen Schwenkhebeln 17, 18, 29, 30 ist der Querträger 16 um eine Haltepunktachse 19 drehbar gelagert.

Zum Drehen des Querträgers 16 um die Haltepunktachse 19 ist ein Stellorgan 9 in Form des in den Fig. 2 und 3 gezeigten Hydraulikzylinders vorgesehen. Alternativ kann das Stellorgan 9 von einer Spindel, einem Linearantrieb oder einer Verstellleiste gebildet werden. Der Zylinder 31 des Stellorgans 9 ist drehbar an einem starren Rahmenträger 33 abgestützt. Die Kolbenstange 32 des Stellorgans 9 ist drehbar mit einem Stellhebel 34 verbunden, der an seinem von der Kolbenstange 32 abgewandten Ende seinerseits drehbar auf der Haltepunktachse 19 gelagert ist. Der Stellhebel 34 ist außerdem an dem mittleren Bereich des Querträgers 16 befestigt, so dass das Ein- oder Ausfahren der Kolbenstange 32 in den oder aus dem Zylinder 31 eine Drehbewegung des Querträgers 16 und damit der Haltepunkte 12 um die Haltepunktachse 19 bewirkt.

Bei der gezeigten Ausführungsform werden innerhalb einer Arbeitsgruppe 21 alle Haltepunkte 12 mit Hilfe eines einzigen Stellorgans 9 bewegt. Dadurch erübrigt es sich in vorteilhafter Weise, für jede Antriebseinheit 22 ein separates Stellorgan vorzusehen. Grundsätzlich denkbar ist jedoch auch, für jede Antriebseinheit 22 ein eigenes Stellorgan anzuordnen. Im Rahmen dieser Alternative würde in Fig. 1 der Haltepunkt 12 nicht von einer an dem Querträger 16 befestigten Halteöse gebildet werden, sondern beispielsweise von dem freien Ende der Kolbenstange 32 eines Hydraulikzylinders, in welches der karabinerartige Haken 28 eingehängt ist. Unabhängig davon, ob der Haltepunkt 12 direkt mit der Kolbenstange 32 oder indirekt über den Querträger 16 mit der Kolbenstange 32 verbunden ist, weist die Ausführungsform gemäß Fig. 1 den Vorteil auf, dass die Vorspannung beider Zugfederelemente 5 und 7 mit Hilfe eines einzigen Stellorgans 9 eingestellt werden kann.

Bei Betätigung des Stellorgans 9 in Form des Hydraulikzylinders wird in Fig. 1 der Haltepunkt 12 innerhalb der Zeichenebene entlang einer Kreisbahn mit einem von der Haltepunktachse 19 gebildeten Kreismittelpunkt bewegt. Dadurch können die Vorspannungen der Zugfederelemente 5 und 7 entsprechend der gewünschten Bodenbearbeitung eingestellt werden.

Ist eine grobe Bodenbearbeitung mit erhöhter Andruckkraft des Rechens 3 an den Boden gewünscht, so wird die Kolbenstange 32 weiter ausgefahren, um das erste Zugfederelement 5 stärker zu dehnen und damit stärker vorzuspannen. Daraus resultiert eine erhöhte Zugkraft, die an dem ersten Angriffspunkt 6 des ersten Arms 14 zieht und auf das Trägerelement 2 ein in Fig. 1 im Uhrzeigersinn um den Drehpunkt 4 wirkendes, erhöhtes Drehmoment ausübt, welches den Rechen 3 mit entsprechend erhöhter Andruckkraft gegen den zu bearbeitenden Boden drückt.

Ist eine sanfte Feinbearbeitung des Bodens mit geringer Andruckkraft des Rechens 3 gewünscht, so wird die Kolbenstange 32 weiter eingefahren, so dass sich der Haltepunkt 12 in Fig. 1 auf der vorgenannten Kreisbahn in Richtung des ersten Arms 14 bewegt und dadurch das erste Zugfederelement 5 entlastet sowie das zweite Zugfederelement 7 dehnt und damit vorspannt. Die Vorspannung des zweiten Zugfederelements 7 kann dadurch beispielsweise so eingestellt werden, dass die an dem zweiten Angriffspunkt 8 des zweiten Arms 15 ziehende Zugkraft ein solches in Fig. 1 im Gegenuhrzeigersinn um den Drehpunkt 4 wirkendes Drehmoment auf das Trägerelement 2 ausübt, dass die Andruckkraft des Rechens 3 an den Boden geringer ist als diejenige Andruckkraft, die sich aus dem Eigengewicht des Rechens 3 und des Arms 15 ergeben würde. Des Weiteren kann durch weitergehendes Einfahren der Kolbenstange 32 das zweite Zugfederelement 7 soweit gedehnt und dadurch vorgespannt werden, dass der Rechen 3 entgegen seiner Gewichtskraft von dem zu bearbeitenden Boden abgehoben wird.

Bei der gezeigten Ausführungsform bildet die Verbindung aller Drehpunkte 4 der Arbeitseinheiten 22 eine Trägerelementachse 20, die am besten in den Fig. 2 und 3 zu erkennen ist. Sie verläuft quer zu der Zugrichtung R und parallel zu der Haltepunktachse 19, um welche die Haltepunkte 12 drehbar sind. Wie in Fig. 2 angedeutet, kann sich jedes Trägerelement 2 einer Arbeitseinheit 22 unabhängig von anderen Trägerelementen 2 anderer Arbeitseinheiten 22 um die Trägerelementachse 20 drehen. Der Rechen 3 einer Arbeitseinheit 22 kann somit unabhängig von anderen Rechen 3 anderer Arbeitseinheiten 22 etwaigen Bodenunebenheiten des zu bearbeitenden Bodens individuell nach oben ausweichen.

In Fig. 1 ist des Weiteren ein Anschlag 13 zu erkennen, der mit dem zweiten Arm 15 des Trägerelements 2 zusammenwirkt. Er sorgt dafür, dass sich das Trägerelement 2 in Fig. 1 nicht weiter im Uhrzeigersinn um den Drehpunkt 4 drehen kann, sobald der zweite Arm 15 in Kontakt mit dem Anschlag 13 kommt.

Fig. 1 A zeigt eine zweite Ausführungsform einer Arbeitseinheit 22 des landwirtschaftlichen Arbeitsgeräts 1. Gleiche Bezugszeichen wie in Fig. 1 kennzeichnen gleiche Teile, die zur Vermeidung von Wiederholungen nicht noch einmal beschrieben werden.

Anstelle eines zweiten Zugfederelements 7 weist die zweite Ausführungsform gemäß Fig. 1 A ein Druckfederelement 23 auf, die an einem zweiten Angriffspunkt 35 des zweiten Arms 15 des Trägerelements 2 angreift. Das Druckfederelement 23 ist vorzugsweise auf eine solche Vorspannung eingestellt, dass das von ihr auf das Trägerelement 2 ausgeübte und in Fig. 1 A im Gegenuhrzeigersinn um den Drehpunkt 4 wirkende Druckdrehmoment den Rechen 3 von dem Boden abhebt. Zur Bearbeitung des Bodens kann dann durch Verschieben des Haltepunkts 12 das Zugfederelement 5 soweit gedehnt und damit vorgespannt werden, dass das von ihrer Zugkraft bewirkte Zugdrehmoment, das in Fig. 1A im Uhrzeigersinn um den Drehpunkt 4 auf das Trägerelement 2 wirkt, größer ist als das von dem Druckfederelement 23 bewirkte und in entgegengesetzter Richtung wirkende Druckdrehmoment.

Die Verschiebung des Haltepunkts 12 kann bei der Ausführungsform gemäß Fig. 1 A in derselben Weise erfolgen wie bei der Ausführungsform gemäß Fig. 1. Denkbar ist somit, für jede Arbeitseinheit 22 ein Stellorgan beispielsweise in Form eines Hydraulikzylinders vorzusehen, das an dem karabinerartigen Haken 28 angreift, oder den Haltepunkt 12 über einen Querträger 16 mit einem Stellorgan zu verbinden, durch dessen Betätigung alle Haltepunkte 12 einer Arbeitseinheit 22 bewegt werden.

### BEZUGSZEICHENLISTE

- 1: Arbeitsgerät
- 2: Trägerelement, Winkelhebel
- 3: Rechen
- 4: Drehpunkt
- 5: erstes Zugfederelement
- 6: erster Angriffspunkt
- 7: zweites Zugfederelement
- 8: zweiter Angriffspunkt
- 9: Stellorgan
- 10: erstes Zugende
- 11: zweites Zugende
- 12: Haltepunkt
- 13: Anschlag
- 14: erster Arm
- 15: zweiter Arm
- 16: Querträger
- 17: Schwenkhebel
- 18: Schwenkhebel
- 19: Haltepunktachse
- 20: Trägerelementachse
- 21: Arbeitsgruppe
- 22: Arbeitseinheit
- 23: Druckfederelement
- 24: erste Kette
- 25: Einhängelöcher
- 26: Öse
- 27: zweite Kette
- 28: Haken
- 29: Schwenkhebel
- 30: Schwenkhebel
- 31: Zylinder
- 32: Kolbenstange
- 33: Rahmenträger
- 34: Stellhebel
- 35: zweiter Angriffspunkt

- R: Zugrichtung

## Patentansprüche

1. Landwirtschaftliches Arbeitsgerät (1) umfassend
• wenigstens ein Trägerelement (2), das ein landwirtschaftliches Arbeitswerkzeug (3) zum Bearbeiten eines Bodens trägt, wobei das Trägerelement (2) um einen Drehpunkt (4) schwenkbar angeordnet ist, und
• wenigstens ein erstes Zugfederelement (5), das derart an einem ersten Angriffspunkt (6) des Trägerelements (2) angreift, dass das Arbeitswerkzeug (3) um den Drehpunkt (4) in Richtung des Bodens vorspannbar ist,
**gekennzeichnet durch**
• wenigstens ein zweites Zugfederelement (7), das derart an einem zweiten Angriffspunkt (8) des Trägerelements (2) angreift, dass das Arbeitswerkzeug (3) um den Drehpunkt (4) in Richtung von dem Boden weg vorspannbar ist, und
• eine Einstelleinrichtung (9) zum Einstellen einer Andruckkraft des Arbeitswerkzeugs (3) an den Boden, mittels welcher die Vorspannungen des ersten und des zweiten Zugfederelements (5, 7) einstellbar sind.

2. Arbeitsgerät (1) nach Anspruch 1,
**dadurch gekennzeichnet, dass**
die Vorspannungen des ersten und des zweiten Zugfederelements (5, 7) mittels der Einstelleinrichtung (9) derart einstellbar sind, dass sich das zweite Zugfederelement (7) in einem ungespannten Zustand befindet, wenn das erste Zugfederelement (5) eine Vorspannung des Arbeitswerkzeugs (3) in Richtung Boden ausübt, und sich das erste Zugfederelement (5) in einem ungespannten Zustand befindet, wenn das zweite Zugfederelement (7) eine Vorspannung des Arbeitswerkzeugs (3) von dem Boden weg ausübt.

3. Arbeitsgerät (1) nach Anspruch 1 oder 2,
**dadurch gekennzeichnet, dass**
die Einstelleinrichtung von einem einzigen Stellorgan (9) gebildet wird, das direkt oder indirekt sowohl mit einem von dem ersten Angriffspunkt (6) abgewandten ersten Zugende (10) des ersten Zugfederelements (5) als auch mit einem von dem zweiten Angriffspunkt (8) abgewandten zweiten Zugende (11) des zweiten Zugfederelements (7) wirkverbunden ist.

4. Arbeitsgerät (1) nach Anspruch 3,
**dadurch gekennzeichnet, dass**
das erste Zugende (10) und das zweite Zugende (11) direkt oder indirekt mit einem gemeinsamen Haltepunkt (12) verbunden sind, der mittels des Stellorgans (9) räumlich bewegbar ist.

5. Arbeitsgerät (1) nach Anspruch 4,
**dadurch gekennzeichnet, dass**
mehrere Arbeitseinheiten (22) jeweils wenigstens umfassend das Trägerelement (2), das Arbeitswerkzeug (3), den Drehpunkt (4), das erste Zugfederelement (5), das zweite Zugfederelement (7) und den Haltepunkt (12) vorhanden sind, wobei alle Haltepunkte (12) der mehreren Arbeitseinheiten (22) an einem Querträger (16) angeordnet sind, der mittels des Stellorgans (9) räumlich bewegbar ist.

6. Landwirtschaftliches Arbeitsgerät (1) umfassend
• wenigstens ein Trägerelement (2), das ein landwirtschaftliches Arbeitswerkzeug (3) zum Bearbeiten eines Bodens trägt, wobei das Trägerelement (2) um einen Drehpunkt (4) schwenkbar angeordnet ist, und
• wenigstens ein Zugfederelement (5), das derart an einem ersten Angriffspunkt (6) des Trägerelements (2) angreift, dass das Arbeitswerkzeug (3) um den Drehpunkt (4) in Richtung des Bodens vorspannbar ist,
**gekennzeichnet durch**
• wenigstens ein Druckfederelement (23), das derart an einem zweiten Angriffspunkt (24) des Trägerelements (2) angreift, dass das Arbeitswerkzeug (3) um den Drehpunkt (4) in Richtung von dem Boden weg vorspannbar ist, und
• ein Stellorgan (9) zum Einstellen einer Andruckkraft des Arbeitswerkzeugs (3) an den Boden, mittels welchem die Vorspannung des Zugfederelements (5) einstellbar ist.

7. Arbeitsgerät (1) nach Anspruch 6,
**dadurch gekennzeichnet, dass**
mehrere Arbeitseinheiten (22) jeweils wenigstens umfassend das Trägerelement (2), das Arbeitswerkzeug (3), den Drehpunkt (4), das Zugfederelement (5) und das Druckfederelement (7) vorhanden sind, wobei alle von dem ersten Angriffspunkt (6) abgewandten Zugenden (10) der Zugfederelemente (5) der mehreren Arbeitseinheiten (22) an einem Querträger (16) angeordnet sind, der mittels des Stellorgans (9) räumlich bewegbar ist.

8. Arbeitsgerät (1) nach Anspruch 5 oder 7,
**dadurch gekennzeichnet, dass**
der Querträger (16) mittels wenigstens zwei Schwenkhebeln (17, 18) um eine Haltepunktachse (19) drehbar gelagert ist, so dass eine Betätigung des Stellorgans (9) eine Schwenkbewegung des Querträgers (16) um die Haltepunktachse (19) bewirkt.

9. Arbeitsgerät (1) nach einem der Ansprüche 5, 7 oder 8,
**dadurch gekennzeichnet, dass**
die Drehpunkte (4) der mehreren Arbeitseinheiten (22) eine Trägerelementachse (20) bilden, um welche die mehreren Arbeitseinheiten (22) verschwenkbar sind.

10. Arbeitsgerät (1) nach Anspruch 9 in Verbindung mit Anspruch 8 ,
**dadurch gekennzeichnet, dass**
die Trägerelementachse (20) parallel zu der Haltepunktachse (19) verläuft.

11. Arbeitsgerät (1) nach Anspruch 9 in Verbindung mit Anspruch 8,
**dadurch gekennzeichnet, dass**
die Trägerelementachse (20) und die Haltepunktachse (19) identisch sind.

12. Arbeitsgerät (1) nach einem der Ansprüche 5 oder 7 bis 9,
**dadurch gekennzeichnet, dass**
mehrere Arbeitsgruppen (21) jeweils wenigstens umfassend die mehreren Arbeitseinheiten (22), den Querträger (16) und das Stellorgan (9) vorhanden sind.

13. Arbeitsgerät (1) nach einem der vorangehenden Ansprüche,
**dadurch gekennzeichnet, dass**
das Trägerelement (2) einen von dem Drehpunkt (4) ausgehenden ersten Arm (14) und einen von dem Drehpunkt (4) ausgehenden zweiten Arm (15) aufweist, wobei der erste Angriffspunkt (6) an dem ersten Arm (14) und der zweite Angriffspunkt (8) an dem zweiten Arm (14) angeordnet ist und wobei der zweite Arm (15) das Arbeitswerkzeug (3) trägt.

14. Arbeitsgerät (1) nach Anspruch 13 in zumindest indirekter Rückbeziehung auf Anspruch 1,
**dadurch gekennzeichnet, dass**
der erste Arm (14), der zweite Arm (15), das erste Zugfederelement (5) und das zweite Zugfederelement (7) in einer Ebene liegen.

15. Arbeitsgerät (1) nach Anspruch 13 in zumindest indirekter Rückbeziehung auf Anspruch 6,
**dadurch gekennzeichnet, dass**
der erste Arm (14), der zweite Arm (15), das Zugfederelement (5) und das Druckfederelement (23) in einer Ebene liegen.

## Claims

1. Agricultural implement (1) comprising
- at least one carrier element (2) carrying an agricultural tool (3) for processing land, wherein the carrier element (2) is arranged to be pivotable about a fulcrum (4), and
- at least one first tension spring element (5) which so engages a first engagement point (6) of the carrier element (2) that the tool (3) can be biased about the fulcrum (4) in the direction of the ground,
**characterised by**
- at least one second tension spring element (7) which so engages a second engagement point (8) of the carrier element (2) that the tool (3) can be biased about the fulcrum (4) in a direction away from the ground and
- a setting device (9) for setting a pressing force of the tool (3) against the ground, by means of which device the levels of bias of the first and second tension spring elements (5, 7) are settable.

2. Implement (1) according to claim 1, **characterised in that** the levels of bias of the first and second tension spring elements (5, 7) are so settable by means of the setting device (9) that the second tension spring element (7) is disposed in an unstressed state when the first tension spring element (5) biases the tool (3) in the direction of the ground and the first tension spring element (5) is disposed in an unstressed state when the second tension spring element (7) biases the tool (3) away from the ground.

3. Implement (1) according to claim 1 or 2, **characterised in that** the setting device is formed by a single setting element (9) which is operatively connected directly or indirectly not only with a first traction end (10), which is remote from the first engagement point (6), of the first tension spring element (5), but also with a second traction end (11), which is remote from the second engagement point (8), of the second tension spring element (7).

4. Implement (1) according to claim 3, **characterised in that** the first traction end (10) and the second traction end (11) are directly or indirectly connected with a common retaining point (12) which is three-dimensionally movable by means of the setting element (9).

5. Implement (1) according to claim 4, **characterised in that** a plurality of operating units (22) each at least comprising the carrier element (2), the implement (3), the fulcrum (4), the first tension spring element (5), the second tension spring element (7) and the retaining point (12) is present, wherein all retaining points (12) of the plurality of operating units (22) are arranged at a crossbeam (16) which is three-dimensionally movable by means of the setting element (9).

6. Agricultural implement (1) comprising
- at least one carrier element (2) carrying an agricultural tool (3) for processing land, wherein the carrier element (2) is arranged to be pivotable about a fulcrum (4), and
- at least one tension spring element (5) which so engages a first engagement point (6) of the carrier element (2) that the tool (3) can be biased about the fulcrum (4) in the direction of the ground,
**characterised by**
- at least one compression spring element (23) which so engages a second engagement point (24) of the carrier element (2) that the tool (3) can be biased about the fulcrum (4) in direction away from the ground and
- a setting element (9) for setting a pressing force of the tool (3) against the ground, by means of which the bias of the tension element (5) is settable.

7. Implement (1) according to claim 6, **characterised in that** a plurality of operating units (22) each comprising at least the carrier element (2), a tool (3), the fulcrum (4), the tension spring element (5) and the compression spring element (7) is present, wherein all traction ends (10), which are remote from the first engagement point (6), of the tension spring elements (5) and the plurality of operating units (22) are arranged at a crossbeam (16) which is three-dimensionally movable by means of the setting element (9).

8. Implement (1) according to claim 5 or 7, **characterised in that** the crossbeam (16) is mounted by means of at least two pivot levers (17, 18) to be rotatable about a retaining point axis (19) so that actuation of the setting element (9) produces a pivot movement of the crossbeam (16) about the retaining point axis (19).

9. Implement (1) according to any one of claims 5, 7 or 8, **characterised in that** the fulcra (4) of the plurality of operating units (22) form a carrier element axis (20) about which the plurality of operating units (22) is pivotable.

10. Implement (1) according to claim 9 in conjunction with claim 8, **characterised in that** the carrier element axis (20) extends parallel to the retaining point axis (19).

11. Implement (1) according to claim 9 in conjunction with claim 8, **characterised in that** the carrier element axis (20) and the retaining point axis (19) are identical.

12. Implement (1) according to any one of claims 5 and 7 to 9, **characterised in that** a plurality of operating groups (21) each comprising at least the plurality of operating units (22), the crossbeam (16) and the setting element (9) is present.

13. Implement (1) according to any one of the preceding claims, **characterised in that** the carrier element (2) comprises a first arm (14) extending from the fulcrum (4) and a second arm (15) extending from the fulcrum (4), wherein the first engagement point (6) is arranged at the first arm (14) and the second engagement point (8) at the second arm (14) and wherein the second arm (15) carries the tool (3).

14. Implement (1) according to claim 13 in at least indirect dependency on claim 1, **characterised in that** the first arm (14), the second arm (15), the first tension spring element (5) and the second tension spring element (7) lie in a plane.

15. Implement (1) according to claim 13 in at least indirect dependency on claim 6, **characterised in that** the first arm (14), the second arm (15), the tension spring element (5) and the second compression spring element (23) lie in a plane.

## Revendications

1. Dispositif de travail agricole (1), comprenant
* au moins un élément de support (2) supportant un outil de travail agricole (3) pour travailler la terre, l'élément de support (2) étant arrangé de manière pivotante autour d'un point de pivot (4), et
* au moins un premier élément de ressort de traction (5), engageant un premier point d'engagement (6) de l'élément de support (2) de telle manière que l'outil de travail agricole (3) peut être précontraint autour du point de pivot (4) en direction de la terre,
**caractérisé par**
* au moins un deuxième élément de ressort de traction (7) engageant un deuxième point d'engagement (8) de l'élément de support (2) de telle manière que l'outil de travail agricole (3) peut être précontraint autour du point de pivot (4) en direction éloignée de la terre, et
* un dispositif de réglage (9) pour régler une force de pression de l'outil de travail agricole (3) vers la terre, par laquelle les précontraintes du premier et du deuxième élément de ressort de traction (5, 7) peuvent être réglées.

2. Dispositif de travail (1) selon la revendication 1,
**caractérisé en ce que**
les précontraintes du premier et du deuxième élément de ressort de traction (5, 7) peuvent être réglées par le dispositif de réglage (9) de telle manière que le deuxième élément de ressort de traction (7) est dans un état non précontraint, quand le premier élément de ressort de traction (5) applique une précontrainte de l'outil de travail agricole (3) en direction de la terre, et que le premier élément de ressort de traction (5) est dans un état non précontraint, quand le deuxième élément de ressort de traction (7) applique une précontrainte de l'outil de travail agricole (3) en direction éloignée de la terre.

3. Dispositif de travail (1) selon la revendication 1 ou 2,
**caractérisé en ce que**
le dispositif de réglage est formé par un seul membre de réglage (9) connecté opérationnellement de manière directe ou indirecte à une première extrémité de traction (10) du premier élément de ressort de traction (5) détournée du premier point d'engagement (6) ainsi qu'à une deuxième extrémité de traction (11) du deuxième élément de ressort de traction (7) détournée du deuxième point d'engagement (8).

4. Dispositif de travail (1) selon la revendication 3,
**caractérisé en ce que**
la première extrémité de traction (10) et la deuxième extrémité de traction (11) sont de manière directe ou indirecte connectées à un point de support (12) commun qui peut être déplacé dans l'espace par le membre de réglage (9).

5. Dispositif de travail (1) selon la revendication 4,
**caractérisé en ce que**
plusieurs unités de travail (22), chacune comprenant au moins l'élément de support (2), l'outil de travail (3), le point de pivot (4), le premier élément de ressort de traction (5), le deuxième élément de ressort de traction (7) et le point de support (12), tous les points de support (12) des plusieurs unités de travail (22) étant arrangés à une traverse (16) qui peut être déplacée dans l'espace par le membre de réglage (9).

6. Dispositif de travail agricole (1), comprenant
* au moins un élément de support (2) supportant un outil de travail agricole (3) pour travailler la terre, l'élément de support (2) étant arrangé de manière pivotante autour d'un point de pivot (4), et
* au moins un premier élément de ressort de traction (5), engageant un premier point d'engagement (6) de l'élément de support (2) de telle manière que l'outil de travail agricole (3) peut être précontraint autour du point de pivot (4) en direction de la terre,
**caractérisé par**
* au moins un élément de ressort de pression (23) engageant un deuxième point d'engagement (24) de l'élément de support (2) de telle manière que l'outil de travail agricole (3) peut être précontraint autour du point de pivot (4) en direction éloignée de la terre, et
* un dispositif de réglage (9) pour régler une force de pression de l'outil de travail agricole (3) vers la terre, par laquelle la précontrainte de l'élément de ressort de traction (5) peut être réglées.

7. Dispositif de travail (1) selon la revendication 6,
**caractérisé en ce que**
plusieurs unités de travail (22), chacune comprenant au moins l'élément de support (2), l'outil de travail agricole (3), le point de pivot (4), l'élément de ressort de traction (5), et l'élément de ressort de pression (7), toutes les extrémités de traction (10) du premier élément de ressort de traction (5) détournées du premier point d'engagement (6) des plusieurs unités de travail (22) étant arrangés à une traverse (16) qui peut être déplacée dans l'espace par le membre de réglage (9).

8. Dispositif de travail (1) selon la revendication 5 ou 7,
**caractérisé en ce que**
la traverse (16) est supportée de manière pivotante autour d'un axe de point de support (19) par au moins deux bras de pivotement (17, 18) de sorte qu'un actionnement du membre de réglage (9) entraîne un mouvement de pivotement de la traverse (16) autour de l'axe de point de support (19).

9. Dispositif de travail (1) selon une des revendications 5, 7 ou 8
**caractérisé en ce que**
les points de pivot (4) des plusieurs unités de travail (22) forment un axe d'élément de support (20) autour duquel les plusieurs unités de travail (22) peuvent être pivotées.

10. Dispositif de travail (1) selon la revendication 9 en combinaison avec la revendication 8,
**caractérisé en ce que**
l'axe d'élément de support (20) et parallèle à l'axe de point de support (19).

11. Dispositif de travail (1) selon la revendication 9 en combinaison avec la revendication 8,
**caractérisé en ce que**
l'axe d'élément de support (20) et l'axe de point de support (19) sont identiques.

12. Dispositif de travail (1) selon une des revendications 5 ou 7 à 9,
**caractérisé en ce que**
il y a plusieurs groupes de travail (21), comprenant chacun au moins les plusieurs unités de travail (22), la traverse (16) et le membre de réglage (9).

13. Dispositif de travail (1) selon une des revendications précédentes,
**caractérisé en ce que**
l'élément de support (2) comprend un premier bras (14) s'étendent du point de pivot (4) et un deuxième bras (15) s'étendent du point de pivot (4), le premier point d'engagement (6) étant arrangé au premier bras (14) et le deuxième point d'engagement (8) étant arrangé au deuxième bras (14) et le deuxième bras (15) supportant l'outil de travail (3).

14. Dispositif de travail (1) selon la revendication 13 se référant au moins indirectement à la revendication 1,
**caractérisé en ce que**
le premier bras (14), le deuxième bras (15), le premier élément de ressort de traction (5) et le deuxième élément de ressort de traction (7) étant situés dans un seul plan.

15. Dispositif de travail (1) selon la revendication 13 se référant au moins indirectement à la revendication 6,
**caractérisé en ce que**
le premier bras (14), le deuxième bras (15), l'élément de ressort de traction (5) et l'élément de ressort de pression (23) étant situés dans un seul plan.
